# EUROPEAN PATENT APPLICATION

(11) **EP 1 849 364 A1**
(43) Date of publication of application: **31.10.2007**
(21) Application number: 06113166.0
(22) Date of filing: 26.04.2006
(51) Int. Cl.: A01N 65/00, A01N 43/16, A01N 61/00, A01P 3/00

(54) **Composition comprising a glucan or a glucan derivative and a pesticide and methods for improving plant health**

(71) Applicant: BASF Aktiengesellschaft, 67056 Ludwigshafen (DE)
(72) Inventor: The designation of the inventor has not yet been filed

(57) **Abstract**

The present invention relates to plant-protecting active ingredient mixtures, comprising a component (A) and a component (B),
and corresponding uses and methods for increasing the yield and/or improving the vigour of a plant.
Component (A) is a glucan, e.g. a beta-1,3-glucan, or a glucan derivative, or a seaweed extract, e.g. from a brown algae.
Component (B) is a pesticide, e.g. a fungicidal compound that inhibits the mitochondrial breathing chain at the level of the b/c₁ complex, e.g. a strobilurin.

## Description

The present invention relates to plant-protecting active ingredient mixtures, comprising a component (A) and a component (B), wherein component (A) is a glucan or a glucan derivative and component (B) is a compound selected from the active ingredients as defined below, and to a method for improving the yield and/or the vigor of an agricultural plant by applying to the plant, the locus where the plant is growing or is expected to grow, and/or the seeds from which the plant grows a non-phytotoxic effective amount of component (A) and component (B). Furthermore, the present invention relates to plant-protecting active ingredient mixtures, comprising a seaweed extract and a pesticide.

One typical problem arising in the field of pest control and the control of phytopathogenic fungi lies in the need to reduce the dosage rates of the active ingredient and the residues of the actives in order to reduce or avoid unfavorable environmental or toxicological effects whilst still allowing effective pesticidal action.

Another problem encountered concerns the need to have available pesticidal compounds which are effective against a broad spectrum of pests and/or phytopathogenic fungi.

Another difficulty in relation to the use of pesticides, particularly of fungicides and insecticides, is that practical experience in agriculture has shown that the repeated and exclusive application of an individual pesticidal compound leads in many cases to a rapid selection of pests or harmful fungi which have developed natural or adapted resistance against the active compound in question. Normally, such fungi strains are also cross resistant against other active ingredients having the same mode of action. An effective control of the pathogens with said active compounds is then not possible anymore. However, active ingredients having new mechanisms of action are difficult and expensive to develop.

Another problem underlying the present invention is the desire for compositions that improve the health of a plant. Healthier plants are desirable since they result in better yields of the fruits of the plant and/or a better quality of the plants or fruits. This further offers the possibilty to reduce the amounts of active compounds needed in agriculture and helps avoiding the development of resistances against the respective pesticides.

It was therefore an object of the present invention to provide pesticidal mixtures which solve the problems outlined above.

We have found that this object is in part or in whole achieved by the compositions and uses as provided by the present invention. Particularly, according to one aspect, the present invention provides a composition comprising component (A) and component (B) wherein component (A) is a glucan or a glucan derivative and component (B) is an active compound selected from the group consisting of
B1) an active compound that inhibits the mitochondrial breathing chain at the level of the b/c₁ complex;
B2) carboxylic amides selected from benalaxyl, benodanil, boscalid, carboxin, mepronil, fenfuram, fenhexamid, flutolanil, furametpyr, metalaxyl, ofurace, oxadixyl, oxycarboxin, penthiopyrad, thifluzamid, tiadinil, 4-difluoromethyl-2-methyl-thiazol-5-carboxylic acid-(4'-bromo-biphenyl-2-yl)-amide, 4-difluoromethyl-2-methyl-thiazol-5-carboxylic acid-(4'-trifluoromethyl-biphenyl-2-yl)-amide, 4-difluoromethyl-2-methyl-thiazol-5-carboxylic acid-(4'-chloro-3'-fluoro-biphenyl-2-yl)-amide, 3-difluoromethyl-1-methyl-pyrazol-4-carboxylic acid-(3',4'-dichloro-4-fluoro-biphenyl-2-yl)-amide, 3,4-dichloro-isothiazol-5-carboxylic acid-(2-cyano-phenyl)-amide, dimethomorph, flumorph, flumetover, fluopicolide (picobenzamid), zoxamide, carpropamide, diclocymet, mandipropamid, N-(2-(4-[3-(4-chloro-phenyl)-prop-2-inyloxy]-3-methoxy-phenyl)-ethyl)-2-methanesulfonylamino-3-methyl-butyramid and N-(2-(4-[3-(4-chloro-phenyl)-prop-2-inyloxy]-3-methoxy-phenyl)-ethyl)-2-ethanesulfonylamino-3-methyl-butyramide;
B3) azoles selected from bitertanole, bromuconazole, cyproconazole, difenoconazole, diniconazole, enilconazole, epoxiconazole, fenbuconazole, flusilazole, fluquinconazole, flutriafol, hexaconazole, imibenconazole, ipconazole, metconazole, myclobutanil, penconazole, propiconazole, prothioconazole, simeconazole, tebuconazole, tetraconazole, triadimenol, triadimefon, triticonazole, cyazofamid, imazalil, pefurazoate, prochloraz, triflumizol, benomyl, carbendazim, fuberidazole, thiabendazole, ethaboxam, etridiazole and hymexazole;
B4) nitrogen-containing heterocyclic compounds selected from fluazinam, pyrifenox, 3-[5-(4-chloro-phenyl)-2,3-dimethyl-isoxazolidin-3-yl]-pyridine, bupirimat, cyprodinil, ferimzon, fenarimol, mepanipyrim, nuarimol, pyrimethanil, triforin, fludioxonil, fenpiclonil, aldimorph, dodemorph, fenpropimorph, tridemorph, iprodion, procymidon, vinclozolin, acibenzolar-S-methyl, anilazin, captan, captafol, dazomet, diclomezine, fenoxanil, folpet, fenpropidin, famoxadone, fenamidone, octhilinon, probenazol, proquinazid, pyroquilon, quinoxyfen, tricyclazol, 2-butoxy-6-iodo-3-propyl-chromen-4-one, 3-(3-bromo-6-fluoro-2-methyl-indole-1-sulfonyl)-[1,2,4]triazole-1-sulfonic acid dimethylamide;
B5) carbamates and dithiocarbamates selected from ferbam, mancozeb, metiram, metam, propineb, thiram, zineb, ziram, diethofencarb, flubenthiavalicarb, iprovalicarb, propamocarb, 3-(4-chloro-phenyl)-3-(2-isopropoxycarbonylamino-3-methyl-butyrylamino)-propionic acid methylester and N-(1-(1-(4-cyanophenyl)ethanesulfonyl)-but-2-yl) carbamic acid -(4-fluorophenyl)ester;
B6) guanidines selected from dodin, iminoctadine and guazatin;
B7) antibiotics selected from kasugamycin, polyoxine, streptomycin and validamycin A;
B8) fentin salts;
B9) sulfur-containing heterocyclic compounds selected from isoprothiolan and dithianon;
B10) organophosphorous compounds selected from edifenphos, fosetyl, fosetyl-aluminium, iprobenfos, pyrazophos, tolclofos-methyl, phosphoric acid and the salts thereof;
B11) organo-chloro compounds selected from thiophanate methyl, chlorothalonil, dichlofluanid, tolylfluanid, flusulfamid, phthalide, hexachlorbenzene, pencycuron, quintozen;
B12) nitrophenyl derivatives selected from binapacryl, dinocap and dinobuton;
B13) inorganic active ingredients selected from Bordeaux composition, copper acetate, copper hydroxide, copper oxychloride, basic copper sulfate and sulfur;
B14) spiroxamine;
B15) cyflufenamide;
B16) cymoxanil;
B17) metrafenone;
B18) organo(thio)phosphates selected from acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos and trichlorfon;
B19) carbamates selected from alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicar and triazamate;
B20) pyrethroids selected from allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin and profluthrin, dimefluthrin;
B21) growth regulators selected from a) chitin synthesis inhibitors that are selected from the benzoylureas chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole and clofentazine; b) ecdysone antagonists that are selceted from halofenozide, methoxyfenozide, tebufenozide and azadirachtin; c) juvenoids that are selected from pyriproxyfen, methoprene and fenoxycarb and d) lipid biosynthesis inhibitors that are selected from spirodiclofen, spiromesifen and spirotetramat;
B22) nicotinic receptor agonists/antagonists compoundsselected from clothianidin, dinotefuran, (*EZ*)-1-(6-chloro-3-pyridylmethyl)-*N*-nitroimidazolidin-2-ylideneamine (imidacloprid), (*EZ*)-3-(2-chloro-1,3-thiazol-5-ylmethyl)-5-methyl-1,3,5-oxadiazinan-4-ylidene(nitro)amine (thiamethoxam), nitenpyram, acetamiprid, thiacloprid;
B23) the thiazol compound of formula (Γ¹) 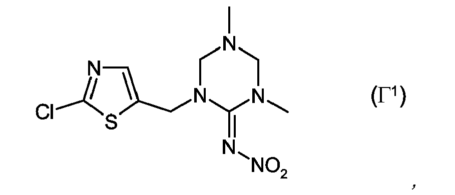
B24) GABA antagonist compoundsselected from acetoprole, endosulfan, ethiprole, 5-amino-1-(2,6-dichloro-α,α,α-trifluoro-*p*-tolyl)-4-trifluoromethylsulfinylpyrazole-3-carbonitrile (fipronil), vaniliprole, pyrafluprole, pyriprole and the phenylpyrazole compound of formula Γ² 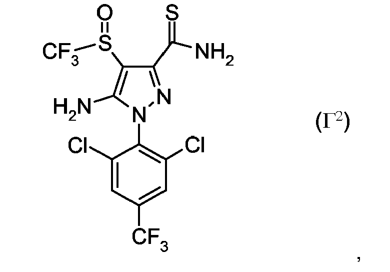
B25) METI I compounds selected from fenazaquin, pyridaben, tebufenpyrad, tolfenpyrad and flufenerim;
B26) METI II and III compounds selected from acequinocyl, fluacyprim and hydramethylnon;
B27) chlorfenapyr;
B28) oxidative phosphorylation inhibitor compounds selected from cyhexatin, diafenthiuron, fenbutatin oxide and propargite;
B29) cyromazine;
B30) piperonyl butoxide;
B31) indoxacarb; and
B32) a compound selected from benclothiaz, bifenazate, cartap, flonicamid, pyridalyl, pymetrozine, sulfur, thiocyclam, flubendiamide, cyenopyrafen, flupyrazofos, cyflumetofen, amidoflumet, the aminoquinazolinone compound of formula Γ⁴ 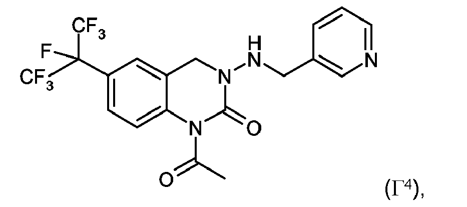 and anthranilamide compounds of formula Γ⁵ 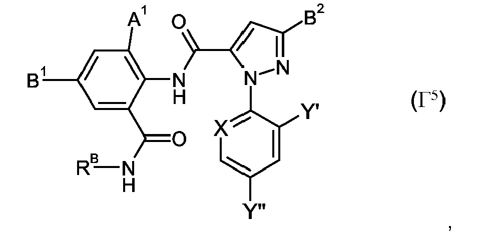 wherein A¹ is CH₃, Cl, Br, I, X is C-H, C-Cl, C-F or N, Y' is F, Cl, or Br, Y" is F, Cl, CF₃, B¹ is hydrogen, Cl, Br, I, CN, B² is Cl, Br, CF₃, OCH₂CF₃, OCF₂H, and R^{B} is hydrogen, CH₃ or CH(CH₃)₂.

Component (A) according to the present invention is a glucan or a glucan derivative. "Glucans" are a class of homopolysaccharides which contain glucose units as monomer building blocks, wherein the glucose molecule may be linked by α- or β-glycosidic bonds and may be branched or straight chain. Specific examples for suitable glucans according to the present invention are β-glucans, more specifically β-1,3-glucans such as, for example, laminarin and curdlan. β-1-3 glucans, for example, have various origins. They can be extracted from bacteria (for example *Alcaligenes faecalis* which leads to curdlan), fungi, yeasts and from various plants, particularly from algae and cereals.

"Glucan derivatives" according to the present invention are glucans that are modified, for example by sulfatation or by hydrolysis. Specific examples for suitable glucan derivatives are sulfated glucans, particularly sulfated β-glucans, more specifically β-1,3-glucans such as sulfated laminarin or sulfated curdlan. Furthermore, also laminaribiose, cellobiose, nigerose, laminaritriose, laminaritetrose and laminaripentose are suitable glucan derivatives according to the present invention.

The sulfatation of glucans is described in US 6,979,665 which relates to a method for stimulating the natural defences of plants using sulfated β-1,3-glucans. The following publications describe methods for sulfatation, which can be used to prepare laminarin sulfate: Alban S. et al., Synthesis of laminarin sulfates with anticoagulant activity, Arzneim. Forsch. (1992) 42; 1005-1008. Analogously, other β-1,3-glucans can be sulfated according to the described method. The sulfated compounds described in these references are suitable according to the present invention as component (A).

The degree of sulfatation of the glucan is preferably equal to or higher than 1.9, preferably from 2 to 2.5. Methods for sulfatation of β-1,3-glucans and a detailed description of sulfated β-1,3-glucans such as sulfated laminarin can be found in US 6,979,665.

Hydrolized β-glucans are disclosed in US 6,387,847. The oligo β-1-3-glucans described therein are suitable according to the present invention as component (A). β-1-3 glucans can be hydrolysed enzymatically using β-glucanases or by use of acid. The desired oligosaccharide fraction is isolated by ultrafiltration from the resulting hydrolysate. The oligosaccharides can also be synthesized chemically via Koenig-Knorr reaction. A detailled description for hydrolyzing β-1-3 glucans, in particular for the synthesis of Laminaribiose, can be found in US 6,303,587. Furthermore, US 6,303,587 discloses certain glucan derivatives that are also suitable as component (A).

In particular, laminarin is a polysaccharide from the *Laminaria* species (seaweed). Laminarin is a linear glucan having β-1,3-glycosidic and some β-1,6-glycosidic linkages. Laminarin can be obtained from brown algae of the Pheophyceae type. For extracting laminarin various methods can be used (see for example Black et al., Appl. Chem. (1951), volume 1, pages 505 to 517, US 5,750,472 and references cited therein). US 5,750,472 discloses the use of laminarin as seed germination and plant growth accelerator. Laminarin can be for example extracted using the method disclosed in FR 92 08387.

According to one preferred embodiment of the present invention, component (A) is a β-glucan, in particular a β-1,3-glucan. Specifically, component (A) is laminarin or curdlan.

According to another preferred embodiment, component (A) is selected from sulfated glucan, Laminaribiose, Cellobiose, Nigerose, Laminaritriose, Laminaritetrose and Laminaripentose.

The active compounds of groups B1) to B17) that can be used as component (B), their preparation and their action against harmful fungi are generally known (cf.: http://wmv.hclrss.demon.co.uk/index.html); they are commercially available. In most of the cases, they can also be found in The Pesticide Manual, 13th Edition, British Crop Protection Council (2003) among other publications.
- benalaxyl, methyl *N*-(phenylacetyl)-*N*-(2,6-xylyl)-DL-alaninate (DE 29 03 612),
- boscalid, 2-chloro-*N*-(4'-chlorbiphenyl-2-yl)nicotinamide (EP-A 545 099);
- carboxin, 5,6-dihydro-2-methyl-*N*-phenyl-1,4-oxathiin-3-carboxamide (US 3 249 499),
- mepronil, 3'-isopropoxy-*o*-toluanilide (US 3 937 840),
- fenhexamid, N-(2,3-dichloro-4-hydroxyphenyl)-1-methylcyclohexanecarboxamide (Proc. Br. Crop Prot. Conf. - Pests Dis., 1998, Vol. 2, p. 327);
- flutolanil, α,α,α-trifluoro-3'-isopropoxy-*o*-toluanilide (JP 1104514),
- furametpyr, 5-chloro-*N-*(1,3-dihydro-1,1,3-trimethyl-4-isobenzofuranyl)-1,3-dimethyl-1*H*-pyrazole-4-carboxamide [CAS RN 123572-88-3],
- metalaxyl, methyl *N*-(methoxyacetyl)-*N*-(2,6-xylyl)-DL-alaninate (GB 15 00 581);
- ofurace, (*RS*)-α-(2-chloro-*N*-2,6-xylyacetamido)-γ-butyrolactone [CAS RN 58810-48-3];
- oxadixyl; *N*-(2,6-dimethylphenyl)-2-methoxy-*N*-(2-oxo-3-oxazolidinyl)acetamide (GB 20 58 059),
- oxycarboxin, 5,6-dihydro-2-methyl-1,4-oxathiin-3-carboxanilide 4,4-dioxide (US 3399214),
- penthiopyrad, *N*-[2*-*(1,3-dimethylbutyl)-3-thienyl]-1-methyl-3-(trifluoromethyl)-1*H-*pyrazole-4-carboxamide (JP 10130268),
- thifluzamide, *N*-[2,6-dibromo-4-(trifluoromethoxy)phenyl]-2-methyl-4-(trifluoromethyl)-5-thiazolecarboxamide;
- tiadinil, 3'-chloro-4,4'-dimethyl-1,2,3-thiadiazole-5-carboxanilide [CAS RN 223580-51-6],
- dimethomorph, 3-(4-chlorophenyl)-3-(3,4-dimethoxyphenyl)-1-morpholin-4-yl-propenone (EP-A 120 321);
- flumorph, 3-(4-fluorophenyl)-3-(3,4-dimethoxyphenyl)-1-morpholin-4-ylpropenone (EP-A 860 438);
- flumetover, 2-(3,4-dimethoxyphenyl)-*N*-ethyl-α,α,α-trifluoro-*N*-Emethyl-*p*-toluamide [A-GROW No. 243, 22 (1995)],
- fluopicolide (picobenzamid), 2,6-dichloro-N-(3-chloro-5-trifluoromethylpyridin-2-ylmethyl)benzamide (WO 99/42447);
- zoxamide, (*RS*)-3,5-dichloro-*N*-(3-chloro-1-ethyl-1-methyl-2-oxopropyl)-*p*-toluamide [CAS RN 156052-68-5];
- carpropamid, 2,2-dichloro-*N*-[1-(4-chlorophenyl)ethyl]-1-ethyl-3-methylcyclopropane-carboxamide [CAS RN 104030-54-8],
- diclocymet, 2-cyano-*N*-[(1*R*)-1-(2,4-dichlorophenyl)ethyl]-3,3-dimethyl butanamide;
- mandipropamid, (*RS*)-2-(4-chlorophenyl)-*N*-[3-methoxy-4-(prop-2-ynyloxy)phenethyl]-2-(prop-2-ynyloxy)acetamide [CAS RN 374726-62-2];
- bitertanole, β-([1,1'-biphenyl]-4-yloxy)-α-(1,1-dimethylethyl)-1*H*-1,2,4-triazole-1-ethanol (DE 23 24 020),
- bromuconazole, 1-[[4-bromo-2-(2,4-dichlorophenyl)tetrahydro-2-furanyl]methyl]-1*H-*1,2,4-triazole (Proc. 1990 Br. Crop. Prot. Conf. - Pests Dis. Vol. 1, p. 459);
- cyproconazole, 2-(4-chlorophenyl)-3-cyclopropyl-1-[1,2,4]triazol-1-ylbutan-2-ol (US 4 664 696);
- difenoconazole, 1-{2-[2-chloro-4-(4-chlorophenoxy)phenyl]-4-methyl-[1,3]dioxolan-2-ylmethyl}-1 H-[1,2,4]triazole (GB-A 2 098 607);
- diniconazole, (β*E*)-β-[(2,4-dichlorophenyl)methylene]-α-(1,1-dimethylethyl)-1*H*-1,2,4-triazole-1-ethanol (Noyaku Kagaku, 1983, Vol. 8, p. 575);
- enilconazole (imazalil), 1-[2-(2,4-dichlorphenyl)-2-(2-propenyloxy)ethyl]-1*H*-imidazole (Fruits, 1973, Vol. 28, p. 545);
- epoxiconazole, (2*RS*,3*SR*)-1-[3-(2-chlorophenyl)-2,3-epoxy-2-(4-fluorophenyl)propyl]-1*H*-1,2,4-triazole (EP-A 196 038);
- fenbuconazole, α-[2-(4-chlorophenyl)ethyl]-α-phenyl-1*H*-1,2,4-triazole-1-propanenitrile (Proc. 1988 Br. Crop Prot. Conf. - Pests Dis. Vol. 1, p. 33);
- flusilazole, 1-{[bis-(4-fluorophenyl)methylsilanyl]methyl}-1H-[1,2,4]triazole (Proc. Br. Crop Prot. Conf.-Pests Dis., 1, 413 (1984));
- fluquinconazole, 3-(2,4-dichlorophenyl)-6-fluoro-2-[1,2,4]-triazol-1-yl-3H-quinazolin-4-one (Proc. Br. Crop Prot. Conf.-Pests Dis., 5-3, 411 (1992));
- flutriafol, α-(2-fluorophenyl)-α-(4-fluorophenyl)-1*H*-1,2,4-triazole-1-ethanol (EP 15 756);
- hexaconazole, 2-(2,4-dichlorophenyl)-1-[1,2,4]triazol-1-ylhexan-2-ol (CAS RN 79983-71-4);
- imibenconazole, (4-chlorophenyl)methyl *N*-(2,4-dichlorophenyl)-1*H*-1,2,4-triazole-1-ethanimidothioate ((Proc. 1988 Br. Crop Prot. Conf. - Pests Dis. Vol. 2, p. 519),
- ipconazole, 2-[(4-chlorophenyl)methyl]-5-(1-methylethyl)-1-(1*H*-1,2,4-triazol-1-yl-methyl)cyclopentanol (EP 267 778),
- metconazole, 5-(4-chlorobenzyl)-2,2-dimethyl-1-[1,2,4]triazol-1-ylmethylcyclopentanol (GB 857 383);
- myclobutanil, 2-(4-chlorophenyl)-2-[1,2,4]triazol-1-ylmethylpentanenitrile (CAS RN 88671-89-0);
- penconazole, 1-[2-(2,4-dichlorophenyl)pentyl]-1H-[1,2,4]triazole (Pesticide Manual, 12th Ed. (2000), p.712);
- propiconazole, 1-[[2-(2,4-dichlorophenyl)-4-propyl-1,3-dioxolan-2-yl]methyl]-1*H*-1,2,4-triazole (BE 835 579);
- prothioconazole, 2-[2-(1-chlorocyclopropyl)-3-(2-chlorophenyl)-2-hydroxypropyl]-2,4-dihydro-[1,2,4]triazole-3-thione (WO 96/16048);
- simeconazole, α-(4-fluorophenyl)-α-[(trimethylsilyl)methyl]-1*H*-1,2,4-triazole-1-ethanol [CAS RN 149508-90-7],
- tebuconazole, 1-(4-chlorophenyl)-4,4-dimethyl-3-[1,2,4]triazol-1-ylmethylpentan-3-ol (EP-A 40 345);
- tetraconazole, 1-[2-(2,4-dichlorophenyl)-3-(1,1,2,2-tetrafluoroethoxy)propyl]-1*H*-1,2,4-triazole (EP 234 242);
- triadimenol, β-(4-chlorophenoxy)-α-(1,1-dimethylethyl)-1*H*-1,2,4-triazole-1-ethanol;
- triadimefon, 1-(4-chlorophenoxy)-3,3-dimethyl-1-(1*H*-1,2,4-triazol-1-yl)-2-butanone;
- triticonazole, (5*E*)-5-[(4-chlorophenyl)methylene]-2,2-dimethyl-1-(1*H*-1,2,4-triazol-1-ylmethyl)cyclopentanol (FR 26 41 277);
- cyazofamid, 4-chloro-2-cyano-*N*,*N*-dimethyl-5-(4-methylphenyl)-1*H*-imidazole-1-sulfonamide (CAS RN 120116-88-3],
- pefurazoate, 4-pentenyl 2-[(2-furanylmethyl)(1*H*-imidazol-1-ylcarbonyl)amino]butanoate [CAS RN 101903-30-4],
- prochloraz, N-{propyl-[2-(2,4,6-trichlorophenoxy)ethyl]}imidazole-1-carboxamide (US 3 991 071);
- triflumizole, (4-chloro-2-trifluoromethylphenyl)-(2-propoxy-1-[1,2,4]triazol-1-ylethylidene)amine (JP-A 79/119 462)
- benomyl, N-butyl-2-acetylaminobenzoimidazol-1-carboxamide (US 3 631 176);
- carbendazim, methyl (1H-benzoimidazol-2-yl)-carbamate (US 3 657 443);
- fuberidazole, 2-(2-furanyl)-1*H*-benzimidazole (DE 12 09 799),
- thiabendazole, 2-(1,3-thiazol-4-yl)benzimidazole (US 3 017 415),
- ethaboxam, *N*-(cyano-2-thienylmethyl)-4-ethyl-2-(ethylamino)-5-thiazolcarboxamide (EP-A 639 574),
- etridiazole,
- hymexazole, 5-methyl-1,2-oxazol-3-ol (JP 518249, JP 532202),
- fluazinam, 3-chloro-N-[3-chloro-2,6-dinitro-4-(trifluoromethyl)phenyl]-5-(trifluoromethyl)-2-pyridinamine (The Pesticide Manual, publ. The British Crop Protection Council, 10th ed. (1995), p. 474);
- pyrifenox, 1-(2,4-dichlorophenyl)-2-(3-pyridinyl)ethanone *O*-methyloxime (EP-A 49 854);
- bupirimate, 5-butyl-2-ethylamino-6-methylpyrimidin-4-yldimethylsulfamate [CAS RN 41483-43-6];
- cyprodinil, (4-cyclopropyl-6-methylpyrimidin-2-yl)phenylamine (EP-A 310 550);
- ferimzone, (2)-2'-methylacetophenone 4,6-dimethylpyrimidin-2-ylhydrazone [CAS RN 89269-64-7];
- fenarimol, (4-chlorophenyl) (2-chlorophenyl) pyrimidin-5-ylmethanol (GB 12 18 623);
- mepanipyrim, (4-methyl-6-prop-1-ynylpyrimidin-2-yl)phenylamine (EP-A 224 339);
- nuarimol, α-(2-chlorophenyl)-α-(4-fluorophenyl)-5-pyrimidinemethanol (GB 12 18 623);
- pyrimethanil, 4,6-dimethylpyrimidin-2-ylphenylamine (DD-A 151 404);
- triforine, *N,N-*{piperazine-1,4-diylbis[(trichloromethyl)methylene]}diformamide (DE 19 01 421);
- fludioxonil, 4-(2,2-difluorobenzo[1,3]dioxol-4-yl)-1H-pyrrole-3-carbonitrile (The Pesticide Manual, publ. The British Crop Protection Council, 10th ed. (1995), p. 482);
- fenpiclonil, 4-(2,3-dichlorophenyl)-1 H-pyrrole-3-carbonitrile (Proc. 1988 Br. Crop Prot. Conf. - Pests Dis., Vol. 1, p. 65);
- aldimorph, 4-alkyl-2,5(or 2,6)-dimethylmorpholine, comprising 65-75% of 2,6-dimethylmorpholine and 25-35% of 2,5-dimethylmorpholine, comprising more than 85% of 4-dodecyl-2,5(or 2,6)-dimethylmorpholine, where "alkyl" may also include octyl, decyl, tetradecyl or hexadecyl and where the cis/trans ratio is 1:1;
- dodemorph, 4-cyclododecyl-2,6-dimethylmorpholine (DE 1198125);
- fenpropimorph, (*RS*)-*cis*-4-[3-(4-*tert-*butylphenyl)-2-methylpropyl]-2,6-dimethylmorpholine (DE 27 52 096);
- tridemorph, 2,6-dimethyl-4-tridecylmorpholine (DE 11 64 152);
- iprodione, N-isopropyl-3-(3,5-dichlorophenyl)-2,4-dioxoimidazolidine-1-carboxamide (GB 13 12 536);
- procymidone, *N*-(3,5-dichlorophenyl)-1,2-dimethylcyclopropane-1,2-dicarboximide (US 3 903 090);
- vinclozolin, 3-(3,5-dichlorophenyl)-5-methyl-5-vinyloxazolidine-2,4-dione (DE-OS 22 07 576);
- acibenzolar-S-methyl, methyl benzo[1,2,3]thiadiazole-7-carbothionate;
- anilazine, 4,6-dichloro-*N*-(2-chlorophenyl)-1,3,5-triazine-2-amine (US 2 720 480);
- captan, 2-trichloromethylsulfanyl-3a,4,7,7a-tetrahydroisoindole-1,3-dione (US 2 553 770);
- captafol, *N-*(1,1,2,2-tetrachloroethylthio)cyclohex-4-ene-1,2-dicarboximide (Phytopathology 52, S. 754 (1962));
- dazomet, 3,5-dimethyl-1,3,5-thiadiazinane-2-thione (Bull. Soc. Chim. Fr. Vol. 15, p. 891 (1897));
- diclomezine, 6-(3,5-dichlorophenyl)-*p*-tolyl)pyridazin-3(2*H*)-one (US 4,052,395);
- fenoxanil, *N*(1-cyano-1,2-dimethylpropyl)-2-(2,4-dichlorophenoxy) propanamide (EP-A 262 393);
- folpet, 2-trichloromethylsulfanylisoindole-1,3-dione (US 2 553 770);
- fenpropidin, (*RS*)-1-[3-(4-*tert*-butylphenyl)-2-methylpropyl]piperidine (DE 27 52 096);
- famoxadone, (*RS*)-3-anilino-5-methyl-5-(4-phenoxyphenyl)-1,3-oxazolidine-2,4-dione [CAS RN 131807-57-3];
- fenamidone, (*S*)-1-anilino-4-methyl-2-methylthio-4-phenylimidazolin-5-one [CAS RN 161326-34-7] ;
- octhilinone,
- probenazole, 3-allyloxy-1,2-benzothiazole 1,1-dioxide;
- proquinazid, 6-iodo-2-propoxy-3-propylquinazolin-4(3*H*)-one (WO 97/48684);
- pyroquilon, 1,2,5,6-tetrahydropyrrolo[3,2,1-*ij*]quinolin-4-on (GB 139 43 373)
- quinoxyfen, 5,7-dichloro-4-(4-fluorophenoxy)quinoline (US 5 240 940);
- tricyclazole, 5-methyl-1,2,4-triazolo[3,4-*b*]benzothiazole (GB 14 19 121);
- ferbam, iron(3+) dimethyldithiocarbamate (US 1 972 961);
- mancozeb, manganese ethylenebis(dithiocarbanate) zinc complex (US 3 379 610);
- maneb, manganese ethylenebis(dithiocarbamate) (US 2 504 404);
- metiram, zinc ammoniate ethylenebis(dithiocarbamate) (US 3 248 400);
- metam, methyldithiocarbaminic acid (US 2 791 605);
- propineb, zinc propylenebis(dithiocarbamate) polymer (BE 611 960);
- thiram, bis(dimethylthiocarbamoyl) disulfide (DE 642 532);
- zineb, zinc ethylenebis(dithiocarbamate) (US 2 457 674);
- ziram, dimethyldithiocarbamate [CAS RN 137-30-4];
- diethofencarb, isopropyl 3,4-diethoxycarbanilate (EP-A 78 663);
- flubenthiavalicarb (benthiavalicarb), isopropyl {(S)-1-[(1R)-1-(6-fluorobenzothiazol-2-yl)ethylcarbamoyl]-2-methylpropyl}carbamate (JP-A 09/323 984);
- iprovalicarb, isopropyl [(1S)-2-methyl-1-(1-p-tolylethylcarbamoyl)propyl]carbamate (EP-A 472 996);
- propamocarb, propyl 3-(dimethylamino)propylcarbamate (DE 16 43 040);
- dodine, (2,4-dichlorophenoxy)acetic acid (US 2 867 562);
- iminoctadine, bis(8-guanidinooctyl)amine (GB 11 14 155);
- guazatine, mixture of products from the amidation of iminodi(octamethylene)diamine, mainly iminoctadine [CAS RN 108173-90-6];
- kasugamycin, 1L-1,3,4/2,5,6-1-deoxy-2,3,4,5,6-pentahydroxycyclohexyl 2-amino-2,3,4,6-tetradeoxy-4-(α-iminoglycino)-α-D-arabino-hexopyranoside [CAS RN 6980-18-3];
- polyoxine, 5-(2-amino-5-*O*-carbamoyl-2-deoxy-L-xylonamido)-1-(5-carboxy-1,2,3,4-tetrahydro-2,4-dioxopyrimidin-1-yl)-1,5-dideoxy-β-D-allofuranuronic acid and the salts thereof [CAS RN 22976-86-9];
- streptomycin, *O*-2-deoxy-2-methylamino-α-L-glucopyranosyl-(1→2)-*O*-5-deoxy-3-*C-*formyl-α-L-lyxofuranosyl-(1→4)*N*¹,*N*³-diamidino-D-streptamine (J. Am. Chem. Soc. 69, S.1234 (1947));
- validamycin A,
- fentin acetate, triphenyltin acetate (US 3 499 086);
- isoprothiolan, diisopropyl 1,3-dithiolan-2-ylidenemalonat (Proc. Insectic. Fungic. Conf. 8. Bd. 2, S. 715 (1975));
- dithianon, 5,10-Dioxo-5,10-dihydronaphtho[2,3-b][1,4]dithiin-2,3-dicarbonitril (GB 857 383);
- edifenphos, *O*-ethyl *S,S*-diphenyl phosphorodithioate (DE-A 14 93 736);
- fosetyl, fosetyl-aluminum, (aluminum) ethylphosphonate (FR 22 54 276);
- iprobenfos, *S*-benzyl *O*,*O*-diisopropyl phosphorothioate (Jpn. Pesticide Inf., No. 2, S. 11 (1970));
- pyrazophos, ethyl 2-diethoxyphosphinothioyloxy-5-methylpyrazolo[1,5-a]pyrimidine-6-carboxylate (DE 15 45 790);
- tolclofos-methyl, *O*-2,6-dichloro-*p*-tolyl *O,O*-dimethyl phosphorothioate (GB 14 67 561);
- thiophanate-methyl, 1,2-phenylenebis(iminocarbonothioyl)bis(dimethylcarbamate) (DE-OS 19 30 540);
- chlorothalonil, 2,4,5,6-tetrachloroisophthalonitrile (US 3 290 353);
- dichlofluanid, N-dichlorofluoromethylthio-*N*,*N*-dimethyl-*N*-phenylsulfamide (DE 11 93 498);
- tolylfluanid, *N*-dichlorofluoromethylthio-*N*,*N*-dimethyl-*N*,*p*-tolylsulfamide (DE 11 93 498);
- flusulfamide, 2',4-dichloro-α,α,α-trifluoro-4'-nitro-*m*-toluenesulfanilide (EP-A 199 433);
- phthalide (DE 16 43 347);
- hexachlorobenzene (C. R. Seances Acad. Agric. Fr., Vol. 31, p. 24 (1945));
- pencycuron, 1-(4-chlorobenzyl)-1-cyclopentyl-3-phenylurea (DE 27 32 257);
- quintozene, pentachloronitrobenzene (DE 682 048);
- binapacryl, (*RS*)-2-*sec*-Butyl-4,6-dinitrophenyl 3-methylcrotonat [CAS RN 485-31-4];
- dinocap, mixture of 2,6-dinitro-4-octylphenylcrotonate and 2,4-dinitro-6-octyl-phenylcrotonate, wherein "octyl" is a mixture of 1-methylheptyl, 1-ethylhexyl and 1-propylpentyl (US 2,526,660);
- dinobuton, *(RS*)-2-*sec*-Butyl-4,6-dinitrophenyl isopropyl carbonat [CAS RN 973-21-7];
- Bordeaux composition, mixture of CuSO₄ x 3Cu(OH)₂ x 3CaSO₄ [CAS RN 8011-63-0]
- copper acetate, Cu(OCOCH₃)₂ [CAS RN 8011-63-0];
- copper oxychloride, Cu₂Cl(OH)₃ [CAS RN 1332-40-7];
- basic copper sulfate, CuSO₄ [CAS RN 1344-73-6];
- spiroxamine, (8-tert-butyl-1,4-dioxaspiro[4.5]dec-2-yl)diethylamine (EP-A 281 842).
- cyflufenamid, (*Z*)-*N*-[α-(cyclopropylmethoxyimino)-2,3-difluoro-6-(trifluoromethyl)benzyl]-2-phenylacetamide (WO 96/19442);
- cymoxanil, 1-(2-cyano-2-methoxyiminoacetyl)-3-ethylurea (US 3 957 847);
- metrafenone, 3'-bromo-2,3,4,6'-tetramethoxy-2',6-dimethylbenzophenone (US 5 945 567);

The compounds named according to IUPAC, their preparation and their fungicidal action are likewise known:
N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide (WO 03/066609),
3,4-dichloro-isothiazol-5-carboxylic acid (2-cyanophenyl) amide (WO 99/24413);
N-(2-(4-[3-(4-Chlor-phenyl)-prop-2-ynyloxy]-3-methoxy-phenyl)-ethyl)-2-methansulfonylamino-3-methyl-butyramid, N-(2-(4-[3-(4-Chlor-phenyl)-prop-2-ynyloxy]-3-methoxy-phenyl)-ethyl)-2-ethanesulfonylamino-3-methyl-butyramid (WO 04/49804); 3-[5-(4-chlorophenyl)-2,3-dimethylisoxazolidin-3-yl]pyridine (EP-A 10 35 122); 2-butoxy-6-iodo-3-propylchromen-4-one (WO 03/14103),
methyl 3-(4-chlorophenyl)-3-(2-isopropoxycarbonylamino-3-methylbutyrylamino)-propanoate (EP-A 1028125)

Furthermore, the commercially available compounds of groups B18) to B32) of component (B) may be found in The Pesticide Manual, 13th Edition, British Crop Protection Council (2003) among other publications.
Thiamides of formula Γ¹ and their preparation have been described in WO 98/28279. Lepimection is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Acetoprole and its preparation have been described in WO 98/28277. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. Cyflumetofen and its preparation have been described in WO 04/080180. Anthranilamides of formula Γ⁵ and their preparation have been described in WO 01/70671; WO 02/48137; WO 03/24222, WO 03/15518, WO 04/67528; WO 04/33468; and WO 05/118552.

According to one embodiment of the invention, component (B) is an active compound that inhibits the mitochondrial breathing chain at the level of the b/c₁ complex.

Active compounds that inhibit the mitochondrial breathing chain at the level of the b/c₁ complex are known as fungicides from the literature [see for example Dechema-Monographien Bd. 129, 27-38, VCH Verlagsgemeinschaft Weinheim 1993; Natural Product Reports 1993, 565-574; Biochem. Soc. Trans. 22, 63S (1993)].

A particularly important class of active compounds that inhibit the mitochondrial breathing chain at the level of the b/c₁ complex are strobilurins. Strobilurins are generally known as fungicides since a long time and have, in some cases, also been described as insecticides (EP-A 178 826; EP-A 253 213; WO 93/15046; WO 95/18789; WO 95/21153; WO 95/21154; WO 95/24396; WO 96/01256; WO 97/15552; WO 97/27189). A further example of an active compound hat inhibits the mitochondrial breathing chain at the level of the b/c₁ complex is famoxadone (5-methyl-5-(4-phenoxyphenyl)-3-(phenylamino)-2,4-oxazolidinedione).

In a further preferred embodiment of the present invention, strobilurins are used as component (B). According to the present invention, strobilurins which have proven particularly suitable are selected from
1) compounds of formula I 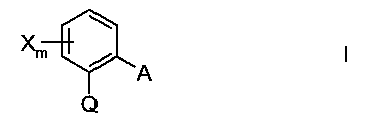 in which
   - X: is halogen, C₁-C₄-alkyl or trifluoromethyl;
   - m: is 0 or 1;
   - Q: is C(=CH-CH₃)-COOCH₃, C(=CH-OCH₃)-COOCH₃, C(=N-OCH₃)-CONHCH₃, C(=N-OCH₃)-COOCH₃, N(-OCH₃)-COOCH₃, or a group Q1 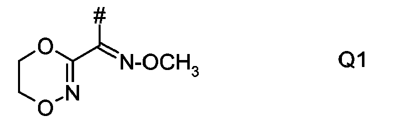 wherein # denotes the bond to the phenyl ring;
   - A: is -O-B, -CH₂O-B, -OCH₂-B, -CH₂S-B, -CH=CH-B, -C≡C-B, -CH₂O-N=C(R¹)-B, -CH₂S-N=C(R¹)-B, -CH₂O-N=C(R¹)-CH=CH-B, or -CH₂O-N=C(R¹)-C(R²)=N-OR³, where
   - B: is phenyl, naphthyl, 5-membered or 6-membered heteroaryl or 5-membered or 6-membered heterocyclyl, containing one, two or three N atoms and/or one O or S atom or one or two O and/or S atoms, the ring systems being unsubstituted or substituted by one, two or three radicals R^{a}:
   R^{a} is independently cyano, nitro, amino, aminocarbonyl, aminothiocarbonyl, halogen, C₁-C₆-alkyl, C₁-C₆-haloalkyl, C₁-C₆-alkylcarbonyl, C₁-C₆-alkylsulfonyl, C₁-C₆-alkylsulfinyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5- or 6-membered heteroaryl, 5- or 6-membered heteroaryloxy, C(=NOR^{a})-R^{b} or OC(R^{a})₂-C(R^{b})=NOR^{b}, the cyclic radicals, in turn, being unsubstituted or substituted by one, two or three radicals R^{b}:
   R^{b} is independently cyano, nitro, halogen, amino, aminocarbonyl, aminothiocarbonyl, C₁-C₆-alkyl, C₁-C₆-haloalkyl, C₁-C₆-alkylsulfonyl, C₁-C₆-alkylsulfinyl, C₃-C₆-cycloalkyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkyl-aminothiocarbonyl, C₂-C₆-alkenyl, C₂-C₆-alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered heteroaryl, 5- or 6-membered heteroaryloxy or C(=NOR^{A})-R^{B};
   R^{A}, R^{B} are independently hydrogen or C₁-C₆-alkyl;
   R¹ is hydrogen, cyano, C₁-C₄-alkyl, C₁-C₄-haloalkyl, C₃-C₆-cycloalkyl, C₁-C₄-alkoxy, or C₁-C₄-alkylthio;
   R² is phenyl, phenylcarbonyl, phenylsulfonyl, 5- or 6-membered heteroaryl, 5-or 6-membered heteroarylcarbonyl or 5- or 6-membered heteroarylsulfonyl, the ring systems being unsubstituted or substituted by one, two or three radicals R^{a},
   C₁-C₁₀-alkyl, C₃-C₆-cycloalkyl, C₂-C₁₀-alkenyl, C₂-C₁₀-alkynyl, C₁-C₁₀-alkylcarbonyl, C₂-C₁₀-alkenylcarbonyl, C₃-C₁₀-alkynylcarbonyl, C₁-C₁₀-alkylsulfonyl, or C(=NOR^{a})-R^{b}, the hydrocarbon radicals of these groups being unsubstituted or substituted by one, two or three radicals R^{c}:
   R^{c} is independently cyano, nitro, amino, aminocarbonyl, aminothiocarbonyl, halogen, C₁-C₆-alkyl, C₁-C₆-haloalkyl, C₁-C₆-alkylsulfonyl, C₁-C₆-alkylsulfinyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy,
   C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered heteroaryl, 5- or 6-membered heteroaryloxy and heteroarylthio, it being possible for the cyclic groups, in turn, to be partially or fully halogenated or to have attached to them one, two or three radicals R^{a}; and
   - R³: is hydrogen, C₁-C₆-alkyl, C₂-C₆-alkenyl, C₂-C₆-alkynyl, the hydrocarbon radicals of these groups being unsubstituted or substituted by one, two or three radicals R^{c}; and
2) the strobilurins (2-chloro-5-[1-(3-methyl-benzyloxyimino)-ethyl]-benzyl)-carbamic acid methyl ester, (2-chloro-5-[1-(6-methyl-pyridine-2-ylmethoxyimino)-ethyl]-benzyl)-carbamic acid methyl ester and 2-(ortho-((2,5-dimethylphenyl-oxymethylene)phenyl)-3-methoxy-acrylic acid methyl ester.

Compounds of formula I are generally known as fungicides since a long time (see references above).

The publications cited above describe synthesis routes for the preparation of strobilurins used in the method according to the invention, the disclosure of which is hereby incorporated.

Especially preferred according to the invention are strobilurins with the following meanings of the substituents, in each case alone or in combination, the disclosure of the publications cited being hereby incorporated:

In one preferred embodiment of the present invention, preferred strobilurins of formula I wherein Q is N(-OCH₃)-COOCH₃ are the compounds described in the publications WO 93/15046 and WO 96/01256.

In another preferred embodiment of the present invention, preferred strobilurins of formula I, wherein Q is C(=CH-OCH₃)-COOCH₃ are the compounds described in the publications EP-A 178 826 and EP-A 278 595.

In another preferred embodiment of the present invention, preferred strobilurins of formula I, wherein Q is C(=N-OCH₃)-COOCH₃ are the compounds described in the publications EP-A 253 213 and EP-A 254 426.

In another preferred embodiment of the present invention, preferred strobilurins of formula I, wherein Q is C(=N-OCH₃)-CONHCH₃ are the compounds described in the publications EP-A 398 692, EP-A 477 631 and EP-A 628 540.

In another preferred embodiment of the present invention, preferred strobilurins of formula I, wherein Q is C(=CH-CH₃)-COOCH₃ are the compounds described in the publications EP-A 280 185 and EP-A 350 691.

In another preferred embodiment of the present invention, preferred strobilurins of formula I, wherein Q is -CH₂O-N=C(R¹)-B are the compounds described in the publications EP-A 460 575 and EP-A 463 488.

In another preferred embodiment of the present invention, preferred strobilurins of formula I, wherein A is -O-B are the compounds described in the publications EP-A 382 375 and EP-A 398 692.

In another preferred embodiment of the present invention, preferred strobilurins of formula I, wherein A is -CH₂O-N=C(R¹)-C(R²)=N-OR³ are the compounds described in the publications WO 95/18789, WO 95/21153, WO 95/21154, WO 97/05103 and WO 97/06133.

Especially preferred are the strobilurins of the formula I in which
Q is N(-OCH₃)-COOCH₃,
A is CH₂-O- and
B is 3-pyrazolyl or 1,2,4-triazolyl, where B has attached to it one or two substituents selected from the group of
- halogen, methyl and trifluoromethyl and
- phenyl and pyridyl, in particular 2-pyridyl, substituted by 1 to 3 radicals R^{b}.

These active ingredients are described by formula II, 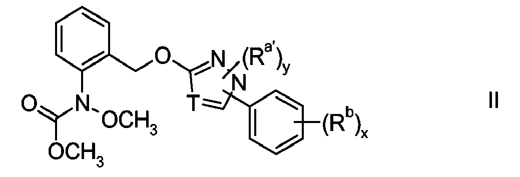 in which T is a carbon or a nitrogen atom, R^{a}' is independently selected from halogen, methyl and trifluoromethyl,
y is zero, 1 or 2, R^{b} is as defined for formula I, x is zero, 1, 2, 3 or 4.

More preferred active ingredients are those of formula II': 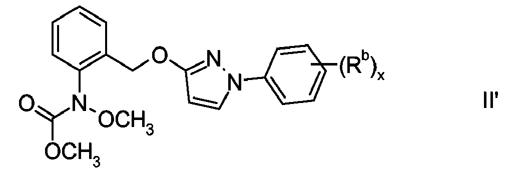 in which R^{b} is as defined for formula I.

According to the present invention, the strobilurin is especially preferably selected from the compounds listed in the following tables.

**Table 1**

| | | | | | |
|---|---|---|---|---|---|
| 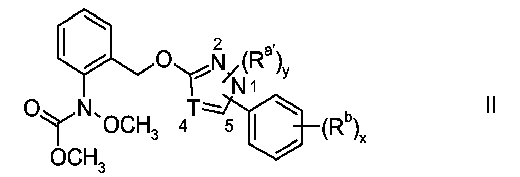 | | | | | |

| No. | T | (R^{a'})_{y} | Position of the group phenyl-(R^{b})ₓ | (R^{b})ₓ | Reference |
|---|---|---|---|---|---|
| II-1 | N | - | 1 | 2,4-Cl₂ | WO 96/01256 |
| II-2 | N | - | 1 | 4-Cl | WO 96/01256 |
| II-3 | CH | - | 1 | 2-Cl | WO 96/01256 |
| II-4 | CH | - | 1 | 3-Cl | WO 96/01256 |
| II-5 | CH | - | 1 | 4-Cl | WO 96/01256 |
| II-6 | CH | - | 1 | 4-CH₃ | WO 96/01256 |
| II-7 | CH | - | 1 | H | WO 96/01256 |
| II-8 | CH | - | 1 | 3-CH₃ | WO 96/01256 |
| II-9 | CH | 5-CH₃ | 1 | 3-CF₃ | WO 96/01256 |
| II-10 | CH | 1-CH₃ | 5 | 3-CF₃ | WO 99/33812 |
| II-11 | CH | 1-CH₃ | 5 | 4-Cl | WO 99/33812 |
| II-12 | CH | 1-CH₃ | 5 | - | WO 99/33812 |

**Table 2**

| | | | | |
|---|---|---|---|---|
| 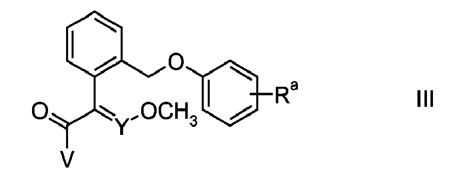 | | | | |

| No. | V | Y | R^{a} | Reference |
|---|---|---|---|---|
| III-1 | OCH₃ | N | 2-CH₃ | EP-A 253 213 |
| III-2 | OCH₃ | N | 2,5-(CH₃)₂ | EP-A 253 213 |
| III-3 | NHCH₃ | N | 2,5-(CH₃)₂ | EP-A 477 631 |
| III-4 | NHCH₃ | N | 2-Cl | EP-A 398 692 |
| III-5 | NHCH₃ | N | 2-CH₃ | EP-A 398 692 |
| III-6 | NHCH₃ | N | 2-CH₃, 4-OCF₃ | EP-A 628 540 |
| III-7 | NHCH₃ | N | 2-Cl, 4-OCF₃ | EP-A 628 540 |
| III-8 | NHCH₃ | N | 2-CH₃,4-OCH(CH₃)-C(CH₃)=NOCH₃ | EP-A 11 18 609 |
| III-9 | NHCH₃ | N | 2-Cl, 4-OCH(CH₃)-C(CH₃)=NOCH₃ | EP-A 11 18 609 |
| III-10 | NHCH₃ | N | 2-CH₃, 4-OCH(CH₃)-C(CH₂CH₃)=NOCH₃ | EP-A 11 18 609 |
| III-11 | OCH₃ | CH | 2,5-(CH₃)₂ | EP-A 226 917 |

**Table 3**

| | | | | | |
|---|---|---|---|---|---|
| 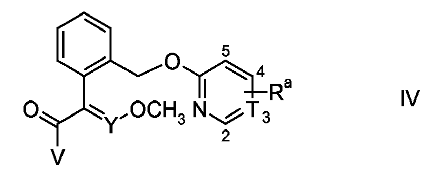 | | | | | |

| No. | V | Y | T | R^{a} | Reference |
|---|---|---|---|---|---|
| IV-1 | OCH₃ | CH | N | 2-OCH₃, 4-CF₃ | WO 96/16047 |
| IV-2 | OCH₃ | CH | N | 2-OCH(CH₃)₂, 4-CF₃ | WO 96/16047 |
| IV-3 | OCH₃ | CH | CH | 2-CF₃ | EP-A 278 595 |
| IV-4 | OCH₃ | CH | CH | 4-CF₃ | EP-A 278 595 |
| IV-5 | NHCH₃ | N | CH | 2-Cl | EP-A 398 692 |
| IV-6 | NHCH₃ | N | CH | 2-CF₃ | EP-A 398 692 |
| IV-7 | NHCH₃ | N | CH | 2-CF₃, 4-Cl | EP-A 398 692 |
| IV-8 | NHCH₃ | N | CH | 2-Cl, 4-CF₃ | EP-A 398 692 |

**Table 4**

| | | | | | |
|---|---|---|---|---|---|
| 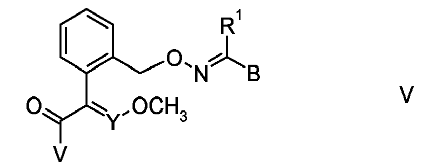 | | | | | |

| No. | V | Y | R¹ | B | Reference |
|---|---|---|---|---|---|
| V-1 | OCH₃ | CH | CH₃ | (3-CF₃)C₆H₄ | EP-A 370 629 |
| V-2 | OCH₃ | CH | CH₃ | (3,5-Cl₂)C₆H₃ | EP-A 370 629 |
| V-3 | NHCH₃ | N | CH₃ | (3-CF₃)C₆H₄ | WO 92/13830 |
| V-4 | NHCH₃ | N | CH₃ | (3-OCF₃)C₆H₄ | WO 92/13830 |
| V-5 | OCH₃ | N | CH₃ | (3-OCF₃)C₆H₄ | EP-A 460 575 |
| V-6 | OCH₃ | N | CH₃ | (3-CF₃)C₆H₄ | EP-A 460 575 |
| V-7 | OCH₃ | N | CH₃ | (3,4-Cl₂)C₆H₃ | EP-A 460 575 |
| V-8 | OCH₃ | N | CH₃ | (3,5-Cl₂)C₆H₃ | EP-A 463 488 |
| V-9 | OCH₃ | CH | CH₃ | CH=CH-(4-Cl)C₆H₄ | EP-A 936 213 |

**Table 5**

| | | | | | |
|---|---|---|---|---|---|
| 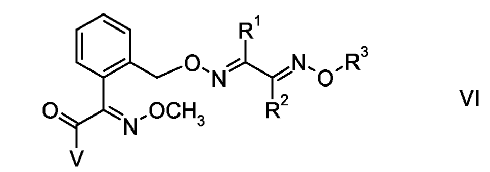 | | | | | |

| No. | V | R¹ | R² | R³ | Reference |
|---|---|---|---|---|---|
| VI-1 | OCH₃ | CH₃ | CH₃ | CH₃ | WO 95/18789 |
| VI-2 | OCH₃ | CH₃ | CH(CH₃)₂ | CH₃ | WO 95/18789 |
| VI-3 | OCH₃ | CH₃ | CH₂CH₃ | CH₃ | WO 95/18789 |
| VI-4 | NHCH₃ | CH₃ | CH₃ | CH₃ | WO 95/18789 |
| VI-5 | NHCH₃ | CH₃ | 4-F-C₆H₄ | CH₃ | WO 95/18789 |
| VI-6 | NHCH₃ | CH₃ | 4-Cl-C₆H₄ | CH₃ | WO 95/18789 |
| VI-7 | NHCH₃ | CH₃ | 2,4-C₆H₃ | CH₃ | WO 95/18789 |
| VI-8 | NHCH₃ | Cl | 4-F-C₆H₄ | CH₃ | WO 98/38857 |
| VI-9 | NHCH₃ | Cl | 4-Cl-C₆H₄ | CH₂CH₃ | WO 98/38857 |
| VI-10 | NHCH₃ | CH₃ | CH₂C(=CH₂)CH₃ | CH₃ | WO 97/05103 |
| VI-11 | NHCH₃ | CH₃ | CH=C(CH₃)₂ | CH₃ | WO 97/05103 |
| VI-12 | NHCH₃ | CH₃ | CH=C(CH₃)₂ | CH₂CH₃ | WO 97/05103 |
| VI-13 | NHCH₃ | CH₃ | CH=C(CH₃)CH₂CH₃ | CH₃ | WO 97/05103 |
| VI-14 | NHCH₃ | CH₃ | O-CH(CH₃)₂ | CH₃ | WO 97/06133 |
| VI-15 | NHCH₃ | CH₃ | O-CH₂CH(CH₃)₂ | CH₃ | WO 97/06133 |
| VI-16 | NHCH₃ | CH₃ | C(CH₃)=NOCH₃ | CH₃ | WO 97/15552 |

**Table 6**

| | | | | |
|---|---|---|---|---|
| 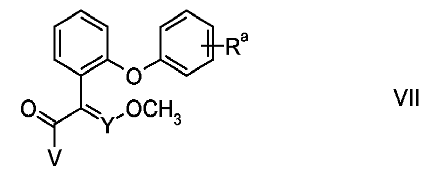 | | | | |

| No. | V | Y | R^{a} | Reference |
|---|---|---|---|---|
| VII-1 | NHCH₃ | N | H | EP-A 370 629 |
| VII-2 | NHCH₃ | N | 3-CH₃ | EP-A 370 629 |
| VII-3 | NHCH₃ | N | 2-NO₂ | WO 92/13830 |
| VII-4 | NHCH₃ | N | 4-NO₂ | WO 92/13830 |
| VII-5 | NHCH₃ | N | 4-Cl | EP-A 460 575 |
| VII-6 | NHCH₃ | N | 4-Br | EP-A 460 575 |

**Table 7**

| | | | |
|---|---|---|---|
| 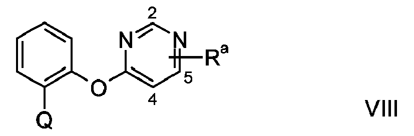 | | | |

| No. | Q | Rₐ | Reference |
|---|---|---|---|
| VIII-1 | C(=CH-OCH₃)COOCH₃ | 5-O-(2-CN-C₆H₄) | EP-A 382 375 |
| VIII-2 | C(=CH-OCH₃)COOCH₃ | 5-O-(2-Cl-C₆H₄) | EP-A 382 375 |
| VIII-3 | C(=CH-OCH₃)COOCH₃ | 5-O-(2-CH₃-C₆H₄) | EP-A 382 375 |
| VIII-4 | C(=N-OCH₃)CONHCH₃ | 5-O-(2-Cl-C₆H₄) | GB-A 2253624 |
| VIII-5 | C(=N-OCH₃)CONHCH₃ | 5-O-(2,4-Cl₂-C₆H₃) | GB-A 2253624 |
| VIII-6 | C(=N-OCH₃)CONHCH₃₃ | 5-O-(2-CH₃-C₆H₄) | GB-A 2253624 |
| VIII-7 | C(=N-OCH₃)CONHCH₃ | 5-O-(2-CH₃,3-Cl-C₆H₃) | GB-A 2253624 |
| VIII-8 | C(=N-OCH₃)CONHCH₃ | 4-F, 5-O-(2-CH₃-C₆H₄) | WO 98/21189 |
| VIII-9 | C(=N-OCH₃)CONHCH₃ | 4-F, 5-O-(2-Cl-C₆H₄) | WO 98/21189 |
| VIII-10 | C(=N-OCH₃)CONHCH₃ | 4-F, 5-O-(2-CH₃,3-Cl-C₆H₃) | WO 98/21189 |
| VIII-11 | 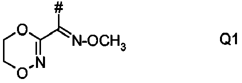 | 4-F, 5-O-(2-Cl-C₆H₄) | WO 97/27189 |
| VIII-12 | 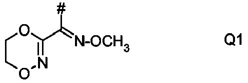 | 4-F, 5-O-(2-CH₃,3-Cl-C₆H₃) | WO 97/27189 |
| VIII-13 | 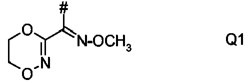 | | |

Especially preferred are the strobilurins: Compound II-5 (pyraclostrobin), III-1 (kresoxim-methyl), III-3 (dimoxystrobin), III-11 (ZJ 0712), IV-3 (picoxystrobin), V-6 (trifloxystrobin), V-9 (enestroburin), VI-16 (orysastrobin), VII-1 (metominostrobin), VIII-1 (azoxystrobin), and VIII-11 (fluoxastrobin). Particularly preferred is pyraclostrobin (compound II-5), kresoxim-methyl (compound III-1) or azoxystrobin (compound VIII-1), in particular pyraclostrobin.

According to another embodiment of the present invention, component (B) is a carboxylic amide selected from the group B2).

According to another embodiment of the present invention, component (B) is an azole selected from the group B3).

According to another embodiment of the present invention, component (B) is a nitrogen-containing heterocyclic compound selected from the group B4).

According to another embodiment of the present invention, component (B) is a carbamate or thiocarbamate selected from the group B5).

According to another embodiment of the present invention, component (B) is a guanidine selected from the group B6).

According to another embodiment of the present invention, component (B) is an antibiotic selected from the group B7).

According to another embodiment of the present invention, component (B) is a fentin salt.

According to another embodiment of the present invention, component (B) is isoprothiolan or dithianon.

According to another embodiment of the present invention, component (B) is an organophosphorous compound selected from the group B10).

According to another embodiment of the present invention, component (B) is an organo-chloro compound selected from the group B11).

According to another embodiment of the present invention, component (B) is a nitrophenyl derivative selected from the group B12).

According to another embodiment of the present invention, component (B) is an inorganic ingredient selected from the group B13).

According to another embodiment of the present invention, component (B) is spiroxamine.

According to another embodiment of the present invention, component (B) is cyflufenamide.

According to another embodiment of the present invention, component (B) is cymoxanil.

According to another embodiment of the present invention, component (B) is metrafenone.

According to still another preferred embodiment of the present ivention, component (B) is (*EZ*)-3-(2-chloro-1,3-thiazol-5-ylmethyl)-5-methyl-1,3,5-oxadiazinan-4-ylidene(nitro)amine (Thiamethoxam).

According to still another preferred embodiment of the present ivention, component (B) is 5-amino-1-(2,6-dichloro-α,α,α-trifluoro-*p*-tolyl)-4-trifluoromethylsulfinylpyrazole-3-carbonitrile (Fipronil).

According to still another preferred embodiment of the present ivention, component (B) is (*EZ*)-1-(6-chloro-3-pyridylmethyl)-*N*-nitroimidazolidin-2-ylideneamine (Imidacloprit).

If the component (A) is a sulfated glucan as defined above, component (B) can also be the active ingredient maneb.

In another aspect, the present invention relates to a composition comprising an extract from seaweed and a pesticide. The seaweed extract is preferably obtained according to the methods as described in WO 93/06730, which is hereby incorporated by reference. Particularly, the extract is obtained from a brown algae, wherein the brown algae is specifically from the *Phaeophyceae* type (in particular *Fucales* or *Laminariales).* In general, the extraction can be accomplished by basic hydrolysis of the respective seaweed in the presence of a reducing agent such as an alkali metal borhydride. Then, the resulting hydrolysate is neutralised to a pH of about 6 to 8, e.g. by the addition of a strong acid. The product is filtrated and optionally diafiltrated or an electrodialysis may carried out (cf. WO 93/06730).

The pesticide that can be used according to this aspect of the invention, may be selected from fungicides and insecticides. Also maneb is a suitable pesticide. Particularly, the pesticide is selected from the components (B) and preferred components (B) as indicated above.

The inventive compositions are suitable for improving the health of plants when applied to plants, parts of plants, seeds, or at their locus of growth.

Thus, it was surprisingly found within the framework of the present invention that the simultaneous, that means conjoint or separate, use of a glucan or glucan derivative as component (A) together with a compound as listed for component (B) or the subsequent use of components (A) and (B) leads to a synergistic effect, i.e. the effectiveness of the mixture is higher compared to the use of the individual components. Thereby, synergistic yield increasing effects and/or synergistic vigor improving effects can be obtained. Surprisingly, components (A) can be used as synergists for a variety of different active ingredients. By simultaneous application of the components (A) with a component (B) together or by separate application of components (A) and (B), said effects are increased more than additively. Component (A) and component (B) are thus preferably present in synergistic amounts.

Analoguously, it was surprisingly found that the simultaneous, that means conjoint or separate, use of a seaweed extract together with a pesticide or the subsequent use of such seaweed extract and pesticide leads to a synergistic effect, i.e. the effectiveness of the mixture is higher compared to the use of the individual components. Thereby, synergistic yield increasing effects and/or synergistic vigor improving effects can be obtained. Surprisingly, seaweed extract as defined herein can be used as synergists for a variety of different active ingredients. The two components of the inventive compositions are thus preferably present in synergistic amounts.

Consequently, according to another aspect, the present invention provides the use of a composition as defined according to the present invention for increasing the yield and/or improving the vigor of an agricultural plant. Furthermore, the present invention provides the use of a composition comprising Laminarin and a pesticide for improving the increasing the yield and/or improving the vigor of an agricultural plant.

The present invention further provides a method for increasing the yield and/or improving the vigor of a plant, which comprises treating the plant, the locus where the plant is growing or is expected to grow, and/or the seeds from which the plant grows with a non-phytotoxic effective amount of component (A) and component (B) as defined herein. According to this inventive method the plant, the locus where the plant is growing or is expected to grow, and/or the seeds from which the plant grows are preferably treated simultaneously (together or separately) or subsequently with the components (A) and (B).

According to a further embodiment, the present invention provides a method for increasing the yield and/or improving the vigor of a plant, which comprises treating the plant, the locus where the plant is growing or is expected to grow, and/or the seeds from which the plant grows with a non-phytotoxic effective amount of Laminarin and a pesticide as defined herein. According to this inventive method, the plant, the locus where the plant is growing or is expected to grow, and/or the seeds from which the plant grows are preferably treated simultaneously (together or separately) or subsequently with Laminarin and the pesticide.

According to still a further embodiment the present invention provides a method for increasing the yield and/or improving the vigor of a plant, which comprises treating the plant, the locus where the plant is growing or is expected to grow, and/or the seeds from which the plant grows with a non-phytotoxic effective amount of the extract from seeweed and the pesticide as defined herein. Also according to this inventive method, the plant, the locus where the plant is growing or is expected to grow, and/or the seeds from which the plant grows are preferably treated simultaneously (together or separately) or subsequently with the extract from seeweed and the pesticide.

According to the present invention, "increased yield" of an agricultural plant means that the yield of a product of the respective plant is increased by a measurable amount over the yield of the same product of the plant produced under the same conditions, but without the application of the present invention. According to the present invention, it is preferred that the yield be increased by at least 0,5 %, more preferred at least 1 %, even more preferred at least 2 %, still more preferred at least 4 %.

According to the present invention, "improved plant vigor" means that certain crop characteristics are increased or improved by a measurable or noticeable amount over the same factor of the plant produced under the same conditions, but without the application of the present invention, such as: delay of senescence, root growth, longer panicles, increased or improved plant stand, the plant weight, plant height, emergence, improved visual appearance, improved protein content, more developed root system, tillering increase, increase in plant height, bigger leaf blade, less dead basal leaves, stronger tillers, greener leaf color, pigment content, photosynthetic activity, less fertilizers needed, less seeds needed, more productive tillers, earlier flowering, early grain maturity, less plant verse (lodging), increased shoot growth, early and improved germination, improved vitality of the plant, improved quality of the plant, improved quality of the fruits or vegetables (or other products produced by the plant), improved self defense meachinism of the plant such as induced tolerance against fungi, bacteria, viruses and/or insects.

The improvement of the plant vigor according to the present invention particularly means that the improvement of any one or several or all of the above mentioned plant characteristics are improved independently of the pesticidal action of the composition or active ingredients.

According to one embodiment of the present invention, the inventive compositions are used for yield increase of an agricultural plant.

According to a further embodiment of the present invention, the inventive compositions are used for stimulating the natural defensive reactions of a plant against a pathogen and/or a pest. Thereby, the plant can be protected against unwanted microorganisms such as phytopathogenic fungi, bacteria, viruses and insects and it has been found that the inventive compositions result in plant strengthening effects. Therefore, they are useful for mobilizing the plant's defense mechanisms against the attack of unwanted microorganisms. Consequently, the plant becomes tolerant or resistant towards these microorganisms. Unwanted microorganisms in this context are phytopathogenic fungi and/or bacteria and/or viruses and/or insects, preferably phytopathogenic fungi, bacteria and/or viruses, wherein, according to the present invention, the treated plant may develop increased defense mechanism against one of these pathogens/pests or against two, three or all of these pathogens/pests.

According to one embodiment of the described methods of the invention the treatment is made to vegetables and field crops. According to a further embodiment of the described methods of the invention the treatment is made to cereals such as for example wheat, barley or rye. In one specific embodiment, the method of the invention can be applied to field crops, such as soybeans, corn, cotton, wheat, barley, rye, rice, sugar beets and/or oilseed rape, in particular soybeans, corn, cotton, tobacco, common beans, wheat, barley, rye, peas, and others. In relation to these crops the method is preferably applied by treating the seeds or the plants. In this embodiment it may be preferred that the plants are treated with two to three applications per season.

According to another embodiment of the described methods of the invention the treatment is made to potatoes, tomatoes, cucurbits, cucumbers, melons, watermelons, garlic, onions, bananas, peanuts, carrots, cabage, peppers, common beans, peas, lentils and/or lettuce, in particular potatoes, tomatoes, cucurbits, cucumbers, melons, watermelons, garlic, onions, and/or lettuce.

According to another embodiment of the described methods of the invention the treatment is made to apples, pears, stone fruits, or citrus, in particular apples, stone fruits, and/or citrus.

According to another embodiment of the described methods of the invention, the treatment is made to strawberries, cherries, almonds, mango, papaya, blueberries and/or grapes in particular strawberries and/or cherries.

According to another embodiment of the described methods of the invention, the treatment is made to turf and/or ornamentals.

According to another embodiment of the described methods of the invention, the treatment is made to tea, tobacco and/or coffee.

According to one embodiment of the described methods of the invention, two to ten, three to eight or four to six treatments with the compounds are made during a season.

According to one embodiment of the invention, the inventive composition is applied via the leaves or to the soil. According to another embodiment of the described methods of the invention, the treatment(s) are carried out as foliar application. In one preferred embodiment of the present invention the method according to the invention is carried out as foliar application or spray application, respectively. Preferably, one, two, three, four, five and up to ten applications during one season are carried out, specifically more than two applications, and up to 10 applications. Also preferred more than two applications, and up to 5 applications during a season are carried out.

The inventive compositions are also suitable for dressing applications on plant propagation material. The latter term embraces seeds of all kinds (fruit, tubers, grains), cuttings, cut shoots and the like. One particular field of application is the treatment of all kinds of seeds.

The method according to the invention is preferably carried out as foliar application when applied to fruit and vegetables, such as potatoes, tomatoes, cucurbits, preferably cucumbers, melons, watermelons, garlic, onions, and lettuce. Preferably more than two applications, and up to 5 or up to 10 applications during a season are carried out.

The application rates are usually between 0.01 and 2.0 kg, preferably up to 1.0 kg of active ingredient per hectare.

According to a further aspect, the present invention relates to seed, comprising one of the inventive copositions as defined herein in an amount of from 0,1 g to 1 kg per 100 kg of seeds.

Furthermore, it has been found that the inventive compositions achieve markedly enhanced action against plant pathogens (insects and harmful fungi) compared to the control rates that are possible with the individual compounds.

Thus, according to a further aspect, the present invention relates to the use of the inventive compositions for combatting phytopathogenic fungi and to a method for controlling harmful (phytopathogenic) fungi, which comprises treating a site, for example a plant or a plant propagation material, that is infested or liable to be infested by fungi with the inventive compositions, in any desired sequence or simultaneously, that is, jointly or separately. They are especially suitable for controlling the following plant diseases:
- *Alternaria* species on vegetables, rapeseed, sugar beet and fruit and rice,
- *Aphanomyces* species on sugar beet and vegetables,
- *Bipolaris* and *Drechslera* species on corn, cereals, rice and lawns,
- *Blumeria graminis* (powdery mildew) on cereals,
- *Botrytis cinerea* (gray mold) on strawberries, vegetables, flowers and grapevines,
- *Bremia lactucae* on lettuce,
- *Cercospora* species on corn, soybeans, rice and sugar beet,
- *Cochliobolus* species on corn, cereals, rice (e.g., *Cochliobolus sativus* on cereals, *Cochliobolus miyabeanus* on rice),
- *Colletotricum* species on soybeans and cotton,
- *Drechslera* species on cereals and corn,
- *Exserohilum* species on corn,
- *Erysiphe cichoracearum* and *Sphaerotheca fuliginea* on cucurbits,
- *Fusarium* and *Verticillium* species on various plants,
- *Gaeumanomyces graminis* on cereals,
- *Gibberella* species on cereals and rice (e.g., *Gibberella fujikuroi* on rice),
- *Grain staining complex* on rice,
- *Helminthosporium* species on corn and rice,
- *Michrodochium nivale* on cereals,
- *Mycosphaerella* species on cereals, bananas and peanuts,
- *Phakopsara pachyrhizi* and *Phakopsara meibomiae* on soybeans,
- *Phomopsis* species on soybeans and sunflowers,
- *Phytophthora infestans* on potatoes and tomatoes,
- *Plasmopara viticola* on grapevines,
- *Podosphaera leucotricha* on apples,
- *Pseudocercosporella herpotrichoides* on cereals,
- *Pseudoperonospora* species on hops and cucurbits,
- *Puccinia* species on cereals and corn,
- *Pyrenophora* species on cereals,
- *Pyricularia oryzae, Corticium sasakii, Sarocladium oryzae, S. attenuatum, Entyloma oryzae* on rice,
- *Pyricularia grisea* on lawns and cereals,
- *Pythium spp.* on lawns, rice, corn, cotton, rapeseed, sunflowers, sugar beet, vegetables and other plants,
- *Rhizoctonia* species on cotton, rice, potatoes, lawns, corn, rapeseed, potatoes, sugar beet, vegetables and other plants,
- *Sclerotinia* species on rapeseed and sunflowers,
- *Septoria tritici* and *Stagonospora nodorum* on wheat,
- *Erysiphe* (syn. *Uncinula*) *necator* on grapevines,
- *Setospaeria* species on corn and lawns,
- *Sphacelotheca reilinia* on corn,
- *Thievaliopsis* species on soybeans and cotton,
- *Tilletia* species on cereals,
- *Ustilago* species on cereals, corn and sugar beet, and
- *Venturia* species (scab) on apples and pears.

According to a further aspect, the present invention relates to the use of the inventive compositions for combatting pests such as insects in agriculture. They are particularly suitable for controlling the following harmful insects from the order of the
lepidopterans (Lepidoptera), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,*
beetles (Coleoptera), for example *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica speciosa, Diabrotica 12-punctata, Diabrotica virgifera, Diloboderus abderus, Epilachna varivestis, Epitrix hirtipennis, Eutinobothrus brasiliensis, Hylobius abietis, Hypera brunneipennis, Hypera postica, lps typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Oryazophagus oryzae, Otiorrhynchus ovatus, Phaedon cochleariae, Phyllotreta chrysocephala, Phyllophaga sp., Phyllophaga cuyabana, Phyllophaga triticophaga, Phyllopertha horticola, Phyllotreta nemorum, Phyllotreta striolata, Popillia japonica, Sitona lineatus* and *Sitophilus granaria,*
dipterans (Diptera), for example *Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea* and *Tipula paludosa,*
thrips (Thysanoptera), e.g. *Frankliniella fusca, Frankliniella occidentalis, Frankliniella tritici, Scirtothrips citri, Thrips oryzae, Thrips palmi* and *Thrips tabaci,*
hymenopterans (Hymenoptera), e.g. *Acromyrmex ambuguus, Acromyrmex crassispinus, Acromyrmex heiery, Acromyrmex landolti, Acromyrmex subterraneus, Athalia rosae, Atta capiguara, Atta cephalotes, Atta laevigata, Atta robusta, Atta sexdens, Atta texana, Hoplocampa minuta, Hoplocampa testudinea, Monomorium pharaonis,* So*lenopsis geminata* and *Solenopsis invicta,*
heteropterans (Heteroptera), e.g. *Acrosternum hilare, Blissus leucopterus, Cyrtopeltis notatus, Dichelops furcatus, Dysdercus cingulatus, Dysdercus intermedius, Euchistos heros, Eurygaster integriceps, Euschistus impictiventris, Leptoglossus phyllopus, Lygus lineolaris, Lygus pratensis, Nezara viridula, Piesma quadrata, Piezodorus guildini, Solubea insularis and Thyanta perditor,*
Hemiptera and Homoptera, e.g. *Acrosternum hilare, Blissus leucopterus, Cyrtopeltis notatus, Diaphorina citri, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis, Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus,*
termites (Isoptera), e.g. *Calotermes flavicollis, Cornitermes cumulans, Heterotermes tenuis, Leucotermes flavipes, Neocapritemes opacus, Procornitermes triacifer; Reticulitermes lucifugus, Syntermes molestus, and Termes natalensis,*
orthopterans (Orthoptera), e.g. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca ameri*cana, *Schistocerca peregrina, Stauronotus maroccanus* and *Tachycines asynamorus,*
Arachnoidea, such as arachnids, e.g. of the families *Argasidae, Ixodidae* and *Sarcoptidae,* such as *Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei,* and Eriophyidae spp. such as *Aculus schlechtendali, Phyllocoptrata oleivora* and *Eriophyes sheldoni;* Tarsonemidae spp. such as *Phytonemus pallidus* and *Polyphagotarsonemus latus;* Tenuipalpidae spp. such as *Brevipalpus phoenicis;* Tetranychidae spp. such as *Tetranychus cinnabarinus, Tetranychus kanzawai, Tetranychus pacificus, Tetranychus telarius* and *Tetranychus urticae, Panonychus ulmi, Panonychus citri, and oligonychus pratensis*;
thrips (Thysanoptera), e.g. *Frankliniella fusca, Frankliniella occidentalis, Frankliniella schultzei, Frankliniella tritici, Scirtothrips citri, Thrips oryzae, Thrips palmi* and *Thrips tabaci*

In particular, the inventive mixtures are suitable for combating pests of the orders Coleoptera, Lepidoptera, Thysanoptera, Homoptera, Isoptera, and Orthoptera.

They are also suitable for controlling the following harmful nematodes such as Meloidogyne, Globodera and Heterodera and other species.

In general, if laminarin is used, it can be preferred to use it in doses of between 0.005 g and 100 g per liter for treating the leaves, and of between 1 g and 100 g per 100 kg for treating the seeds.

The active ingredient mixtures of the invention can be used in the form of premix formulations or the active ingredients can be applied to the area, plant or seed to be treated simultaneously or in immediate succession, if desired together with further carriers, surfactants or other application-promoting adjuvants customarily employed in formulation technology. Besides an effective amount of the active ingredients, the inventive composition can contain an agriculturally acceptable carrier and/or vehicle. The composition may be in solid form, for example in the form of a powder or granules, or in liquid form, for example in the form of an aqueous solution.

The active ingredients or compositions used according to the present invention can be converted into the formulations conventionally used for pesticides, for example solutions, emulsions, suspensions, dusts, powders, pastes and granules. The use form depends on the particular purpose; in any case, it should ensure fine and uniform distribution of the compound according to the invention.

The present invention furthermore provides a composition as described above with at least one one solid or liquid carrier.

Best results are obtained when a formulation is used which supports the transport of the active compounds into the plants, and the distribution within the entire plant.

The compositions generally comprise between 0.1 and 95%, preferably between 0.5 and 90%, by weight of active ingredient.

When employed in plant protection, the amounts applied are, depending on the kind of effect desired, between 0.01 and 2.0 kg of active ingredient per ha.

Seed can be treated by methods known to the person skilled in the art, such as, for example, seed dressing, seed coating, seed dusting, seed soaking and seed pelleting.

In the treatment of seed, the amounts of active ingredient employed are generally from 1 to 1000 g/100 kg of seed, preferably from 1 to 200 g/100 kg, in particular from 5 to 100 g/100 kg.

When used in the protection of materials or stored products, the amount of active ingredient applied depends on the kind of application area and on the desired effect. Amounts customarily applied in the protection of materials are, for example, 0.001 g to 2 kg, preferably 0.005 g to 1 kg, of active compound per cubic meter of treated material.

The formulations are prepared in a known manner, for example by extending the active compound with solvents and/or carriers, if desired using emulsifiers and dispersants. Solvents/auxiliaries which are suitable are essentially:
- water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used,
- carriers such as ground natural minerals (for example kaolins, clays, talc, chalk) and ground synthetic minerals (for example finely divided silica, silicates); emulsifiers such as nonionic and anionic emulsifiers (for example polyoxyethylene fatty alcohol ethers, alkylsulfonates and arylsulfonates) and dispersants such as lignosulfite waste liquors and methylcellulose.

Suitable surfactants are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, strongly polar solvents, for example dimethyl sulfoxide, N-methylpyrrolidone and water.

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

Formulations for seed treatment may further comprise binders and/or gelants and if appropriate dyes.

Binders can be added to increase the adhesion of the active compounds to the seed after the treatment. Suitable binders are for example EO/PO block copolymer surfactants, but also polyvinyl alcohols, polyvinylpyrrolidones, polyacrylates, polymethacrylates, polybutenes, polyisobutylenes, polystyrenes, polyethyleneamines, polyethyleneamides, polyethyleneimines (Lupasol®, Polymin®), polyethers, polyurethanes, polyvinyl acetates, Tylose and copolymers of these polymers. A suitable gelant is for example carrageen (Satiagel®).

In general, the formulations comprise from 0.01 to 95% by weight, preferably from 0.1 to 90% by weight, of the active compound. The active compounds are employed in a purity of from 90% to 100%, preferably 95% to 100% (according to NMR spectrum).

The concentrations of active compound in the ready-to-use preparations can be varied within relatively wide ranges. In general, they are between 0.0001 and 10%, preferably between 0.01 and 1%.

The active compounds can also be used with great success in the ultra-low-volume (ULV) process, it being possible to apply formulations with more than 95% by weight of active compound or even the active compound without additives.

For the treatment of seed, the formulations in question give, after two-to-tenfold dilution, active compound concentrations of from 0.01 to 60% by weight, preferably from 0.1 to 40% by weight, in the ready-to-use preparations.

The following are examples of formulations according to the invention: 1. Products for dilution with water
A Water-soluble concentrates (SL, LS)
   10 parts by weight of active ingredient are dissolved with 90 parts by weight of water or with a water-soluble solvent. As an alternative, wetters or other auxiliaries are added. The active compound dissolves upon dilution with water. This gives a formulation having an active compound content of 10% by weight.
B Dispersible concentrates (DC)
   20 parts by weight of active ingredient are dissolved in 70 parts by weight of cyclohexanone with addition of 10 parts by weight of a dispersant, for example polyvinylpyrrolidone. Dilution with water gives a dispersion. The active compound content is 20% by weight.
C Emulsifiable concentrates (EC)
   15 parts by weight of active ingredient are dissolved in 75 parts by weight of xylene with addition of calcium dodecylbenzenesulfonate and castor oil ethoxylate (in each case 5 parts by weight). Dilution with water gives an emulsion. The formulation has an active compound content of 15% by weight.
D Emulsions (EW, EO, ES)
   25 parts by weight of active ingredient are dissolved in 35 parts by weight of xylene with addition of calcium dodecylbenzenesulfonate and castor oil ethoxylate (in each case 5 parts by weight). This mixture is added to 30 parts by weight of water by means of an emulsifying machine (e.g. Ultraturrax) and made into a homogeneous emulsion. Dilution with water gives an emulsion. The formulation has an active compound content of 25% by weight.
E Suspensions (SC, OD, FS)
   In an agitated ball mill, 20 parts by weight of active ingredient are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.
F Water-dispersible granules and water-soluble granules (WG, SG)
   50 parts by weight of active ingredient are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.
G Water-dispersible powders and water-soluble powders (WP, SP, SS, WS)
   75 parts by weight of active ingredient are ground in a rotor-stator mill with addition of 25 parts by weight of dispersants, wetters and silica gel. Dilution with water gives a stable dispersion or solution of the active compound. The active compound content of the formulation is 75% by weight.

### 2. Products to be applied undiluted

H Dustable powders (DP, DS)
   5 parts by weight of active ingredient are ground finely and mixed intimately with 95 parts by weight of finely divided kaolin. This gives a dustable product with an active compound content of 5% by weight.
I Granules (GR, FG, GG, MG)
   0.5 part by weight of active ingredient is ground finely and associated with 99.5 parts by weight of carriers. Current methods are extrusion, spray-drying or the fluidized bed. This gives granules with an active compound content of 0.5% by weight to be applied undiluted.
J ULV solutions (UL)
   10 parts by weight of active ingredient are dissolved in 90 parts by weight of an organic solvent, for example xylene. This gives a product with an active compound content of 10% by weight to be applied undiluted.

Seed treatment typically utilizes water-soluble concentrates (LS), suspensions (FS), dusts (DS), water-dispersible and water-soluble powders (WS, SS), emulsions (ES), emulsifiable concentrates (EC) and gel formulations (GF). These formulations can be applied neat or preferably diluted to the seed. The application can take place prior to sowing.

Preference is given to using FS formulations for seed treatment. Such formulations typically comprise from 1 to 800 g/l of active compound, from 1 to 200 g/l of surfactants, from 0 to 200 g/l of antifreeze, from 0 to 400 g/l of binder, from 0 to 200 g/l of dyes and solvent, preferably water.

The active compounds can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; the intention is to ensure in each case the finest possible distribution of the active compounds used according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetting agent, tackifier, dispersant or emulsifier. Alternatively, it is also possible to prepare concentrates composed of active substance, wetter, tackifier, dispersant or emulsifier and, if appropriate, solvent or oil, and such concentrates are suitable for dilution with water.

The active compound concentrations in the ready-to-use preparations can be varied within relatively wide ranges. In general, they are from 0.0001 to 10%, preferably from 0.01 to1%.

The active compounds may also be used successfully in the ultra-low-volume process (ULV), by which it is possible to apply formulations comprising over 95% by weight of active compound, or even to apply the active compound without additives.

Various types of oils, wetters, adjuvants, may be added to the active compounds, if appropriate not until immediately prior to use (tank mix). These agents can be admixed with the agents according to the invention in a weight ratio of 1:100 to 100:1, preferably 1:10 to 10:1.

Suitable adjuvants in this sense are in particular: organically modified polysiloxanes, for example Break Thru S 240^{®}; alcohol alkoxylates, for example Atplus 245^{®}, Atplus MBA 1303^{®}, Plurafac LF 300^{®} and Lutensol ON 30^{®}; EO/PO block polymers, for example Pluronic RPE 2035^{®} and Genapol B^{®}; alcohol ethoxylates, for example Lutensol XP 80^{®}; and sodium dioctylsulfosuccinate, for example Leophen RA^{®}.

## Claims

1. A composition comprising component (A) and component (B) wherein component (A) is a glucan or a glucan derivative and component (B) is an active compound selected from the group consisting of
B1) an active compound that inhibits the mitochondrial breathing chain at the level of the b/c₁ complex;
B2) carboxylic amides selected from benalaxyl, benodanil, boscalid, carboxin, mepronil, fenfuram, fenhexamid, flutolanil, furametpyr, metalaxyl, ofurace, oxadixyl, oxycarboxin, penthiopyrad, thifluzamid, tiadinil, 4-difluoromethyl-2-methyl-thiazol-5-carboxylic acid-(4'-bromo-biphenyl-2-yl)-amide, 4-difluoromethyl-2-methyl-thiazol-5-carboxylic acid-(4'-trifluoromethyl-biphenyl-2-yl)-amide, 4-difluoromethyl-2-methyl-thiazol-5-carboxylic acid-(4'-chloro-3'-fluoro-biphenyl-2-yl)-amide, 3-difluoromethyl-1-methyl-pyrazol-4-carboxylic acid-(3',4'-dichloro-4-fluoro-biphenyl-2-yl)-amide, 3,4-dichloro-isothiazol-5-carboxylic acid-(2-cyano-phenyl)-amide, dimethomorph, flumorph, flumetover, fluopicolide (picobenzamid), zoxamide, carpropamide, diclocymet, mandipropamid, N-(2-(4-[3-(4-chloro-phenyl)-prop-2-inyloxy]-3-methoxy-phenyl)-ethyl)-2-methanesulfonylamino-3-methyl-butyramid and N-(2-(4-[3-(4-chloro-phenyl)-prop-2-inyloxy]-3-methoxy-phenyl)-ethyl)-2-ethanesulfonylamino-3-methyl-butyramide;
B3) azoles selected from bitertanole, bromuconazole, cyproconazole, difenoconazole, diniconazole, enilconazole, epoxiconazole, fenbuconazole, flusilazole, fluquinconazole, flutriafol, hexaconazole, imibenconazole, ipconazole, metconazole, myclobutanil, penconazole, propiconazole, prothioconazole, simeconazole, tebuconazole, tetraconazole, triadimenol, triadimefon, triticonazole, cyazofamid, imazalil, pefurazoate, prochloraz, triflumizol, benomyl, carbendazim, fuberidazole, thiabendazole, ethaboxam, etridiazole and hymexazole;
B4) nitrogen-containing heterocyclic compounds selected from fluazinam, pyrifenox, 3-[5-(4-chloro-phenyl)-2,3-dimethyl-isoxazolidin-3-yl]-pyridine, bupirimat, cyprodinil, ferimzon, fenarimol, mepanipyrim, nuarimol, pyrimethanil, triforin, fludioxonil, fenpiclonil, aldimorph, dodemorph, fenpropimorph, tridemorph, iprodion, procymidon, vinclozolin, acibenzolar-S-methyl, anilazin, captan, captafol, dazomet, diclomezine, fenoxanil, folpet, fenpropidin, famoxadone, fenamidone, octhilinon, probenazol, proquinazid, pyroquilon, quinoxyfen, tricyclazol, 2-butoxy-6-iodo-3-propyl-chromen-4-one, 3-(3-bromo-6-fluoro-2-methyl-indole-1-sulfonyl)-[1,2,4]triazole-1-sulfonic acid dimethylamide;
B5) carbamates and dithiocarbamates selected from ferbam, mancozeb, metiram, metam, propineb, thiram, zineb, ziram, diethofencarb, flubenthiavalicarb, iprovalicarb, propamocarb, 3-(4-chloro-phenyl)-3-(2-isopropoxycarbonylamino-3-methyl-butyrylamino)-propionic acid methylester and N-(1-(1-(4-cyanophenyl)ethanesulfonyl)-but-2-yl) carbamic acid -(4-fluorophenyl)ester;
B6) guanidines selected from dodin, iminoctadine and guazatin;
B7) antibiotics selected from kasugamycin, polyoxine, streptomycin and validamycin A;
B8) fentin salts;
B9) sulfur-containing heterocyclic compounds selected from isoprothiolan and dithianon;
B10) organophosphorous compounds selected from edifenphos, fosetyl, fosetyl-aluminium, iprobenfos, pyrazophos, tolclofos-methyl, phosphoric acid and the salts thereof;
B11) organo-chloro compounds selected from thiophanate methyl, chlorothalonil, dichlofluanid, tolylfluanid, flusulfamid, phthalide, hexachlorbenzene, pencycuron, quintozen;
B12) nitrophenyl derivatives selected from binapacryl, dinocap and dinobuton;
B13) inorganic active ingredients selected from Bordeaux composition, copper acetate, copper hydroxide, copper oxychloride, basic copper sulfate and sulfur;
B14) spiroxamine;
B15) cyflufenamide;
B16) cymoxanil;
B17) metrafenone;
B18) organo(thio)phosphates selected from acephate, azamethiphos, azinphosmethyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos and trichlorfon;
B19) carbamates selected from alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicar and triazamate;
B20) pyrethroids selected from allethrin, bifenthrin, cyfluthrin, cyhalothrin, cyphenothrin, cypermethrin, alpha-cypermethrin, beta-cypermethrin, zetacypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin and profluthrin, dimefluthrin;
B21) growth regulators selected from a) chitin synthesis inhibitors that are selected from the benzoylureas chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole and clofentazine; b) ecdysone antagonists that are selceted from halofenozide, methoxyfenozide, tebufenozide and azadirachtin; c) juvenoids that are selected from pyriproxyfen, methoprene and fenoxycarb and d) lipid biosynthesis inhibitors that are selected from spirodiclofen, spiromesifen and spirotetramat;
B22) nicotinic receptor agonists/antagonists compoundsselected from clothianidin, dinotefuran, (*EZ*)-1-(6-chloro-3-pyridylmethyl)-*N*-nitroimidazolidin-2-ylideneamine (imidacloprid), (*EZ*)-3-(2-chloro-1,3-thiazol-5-ylmethyl)-5-methyl-1,3,5-oxadiazinan-4-ylidene(nitro)amine (thiamethoxam), nitenpyram, acetamiprid, thiacloprid;
B23) the thiazol compound of formula (Γ¹) 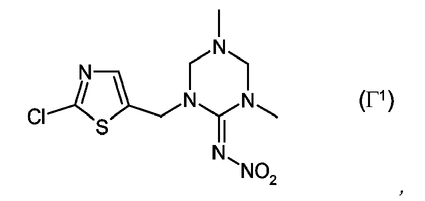
B24) GABA antagonist compoundsselected from acetoprole, endosulfan, ethiprole, 5-amino-1-(2,6-dichloro-α,α,α-trifluoro-*p*-tolyl)-4-trifluoromethylsulfinylpyrazole-3-carbonitrile (fipronil), vaniliprole, pyrafluprole, pyriprole and the phenylpyrazole compound of formula Γ² 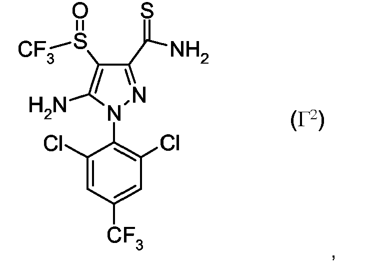
B25) METI I compounds selected from fenazaquin, pyridaben, tebufenpyrad, tolfenpyrad and flufenerim;
B26) METI II and III compounds selected from acequinocyl, fluacyprim and hydramethylnon;
B27) chlorfenapyr;
B28) oxidative phosphorylation inhibitor compounds selected from cyhexatin, diafenthiuron, fenbutatin oxide and propargite;
B29) cyromazine;
B30) piperonyl butoxide;
B31) indoxacarb; and
B32) a compound selected from benclothiaz, bifenazate, cartap, flonicamid, pyridalyl, pymetrozine, sulfur, thiocyclam, flubendiamide, cyenopyrafen, flupyrazofos, cyflumetofen, amidoflumet, the aminoquinazolinone compound of formula Γ⁴ 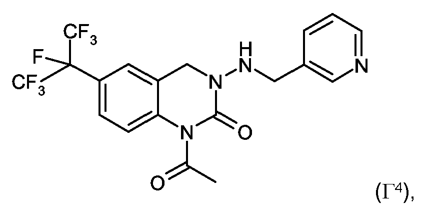 and anthranilamide compounds of formula Γ⁵ 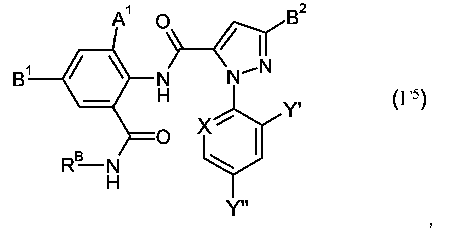
wherein A¹ is CH₃, Cl, Br, I, X is C-H, C-Cl, C-F or N, Y' is F, Cl, or Br, Y" is F, Cl, CF₃, B¹ is hydrogen, Cl, Br, I, CN, B² is Cl, Br, CF₃, OCH₂CF₃, OCF₂H, and R^{B} is hydrogen, CH₃ or CH(CH₃)₂.

2. The composition of claim 1, wherein component (A) and component (B) are present in synergistic amounts.

3. The composition of claim 1 or 2, wherein component (A) is a β-1,3-glucan.

4. The composition of any one of the preceding claims, wherein component (A) is selected from laminarin and curdlan.

5. The composition of claim 1 or 2, wherein component (A) is a glucan derivative selected from sulfated glucan, Laminaribiose, Cellobiose, Nigerose, Laminaritriose, Laminaritetrose and Laminaripentose.

6. The composition of any one of the preceding claims, wherein component (B) is an active compound that inhibits the mitochondrial breathing chain at the level of the b/c₁ complex.

7. The composition of any one of the preceding claims, wherein component (B) is a strobilurin.

8. The composition of any one of the preceding claims, wherein component (B) is selected from pyraclostrobin, kresoxim-methyl, dimoxystrobin, 2-(ortho-((2,5-Dimethylphenyl-oxymethylene)phenyl)-3-methoxy-acrylic acid methyl ester, picoxystrobin, trifloxystrobin, enestroburin, orysastrobin, metominostrobin, azoxystrobin and fluoxastrobin.

9. The composition of any one of claims 1 to 5, wherein component (B) is selected from (*EZ*)-3-(2-chloro-1,3-thiazol-5-ylmethyl)-5-methyl-1,3,5-oxadiazinan-4-ylidene(nitro)amine (Thiamethoxam), 5-amino-1-(2,6-dichloro-α,α,α-trifluoro-*p-*tolyl)-4-trifluoromethylsulfinylpyrazole-3-carbonitrile (Fipronil) and (*EZ*)-1-(6-chloro-3-pyridylmethyl)-*N*-nitroimidazolidin-2-ylideneamine (Imidacloprid).

10. A composition comprising an extract from seaweed and a pesticide.

11. The composition of claim 10, wherein the extract is from a brown algae.

12. The composition of claim 11, wherein the brown algae is of the *Phaeophyceae* type.

13. The composition of any one of claims 10 to 12, wherein the pesticide is selected from the components (B) as indicated in any one of claims 1 and 6 to 9.

14. A use of a composition according to any one of the preceding claims for increasing the yield and/or improving the vigor of an agricultural plant.

15. A use of a composition comprising Laminarin and a pesticide for increasing the yield and/or improving the vigor of an agricultural plant.

16. The use of claim 14 or 15 for stimulating the natural defensive reactions of a plant against a pathogen and/or a pest.

17. The use of claim 14 or 15 for yield increase of an agricultural plant.

18. A method for increasing the yield and/or improving the vigor of a plant, which comprises treating the plant, the locus where the plant is growing or is expected to grow, and/or the seeds from which the plant grows with a non-phytotoxic effective amount of component (A) and component (B) as defined in any one of claims 1 to 9.

19. The method of claim 18, wherein the plant, the locus where the plant is growing or is expected to grow, and/or the seeds from which the plant grows are treated simultaneously (together or separately) or subsequently with the components (A) and (B).

20. A method for increasing the yield and/or improving the vigor of a plant, which comprises treating the plant, the locus where the plant is growing or is expected to grow, and/or the seeds from which the plant grows with a non-phytotoxic effective amount of Laminarin and a pesticide.

21. The method of claim 20, wherein the plant, the locus where the plant is growing or is expected to grow, and/or the seeds from which the plant grows are treated simultaneously (together or separately) or subsequently with Laminarin and the pesticide.

22. A method for increasing the yield and/or improving the vigor of a plant, which comprises treating the plant, the locus where the plant is growing or is expected to grow, and/or the seeds from which the plant grows with a non-phytotoxic effective amount of the extract from seaweed and the pesticide as defined in any one of claims 10 to 13.

23. The method of claim 22, wherein the plant, the locus where the plant is growing or is expected to grow, and/or the seeds from which the plant grows are treated simultaneously (together or separately) or subsequently with the extract from seaweed and the pesticide.

24. The method of any one of claims 18 to 23, wherein two to ten treatments with the compounds are made during a season.

25. The method of any one of claims 18 to 24, wherein the treatment(s) are carried out as foliar application.

26. The method of any one of claims 18 to 25, wherein the treatment is made to vegetables or field crops.

27. The method of any one of claims 18 to 25, wherein the treatment is made to potatoes, tomatoes, cucurbits, cucumbers, melons, watermelons, garlic, onions, bananas, peanuts, carrots, cabage, peppers, common beans, peas, lentils or lettuce.

28. The method of any one of claims 18 to 25, wherein the treatment is made to apples, pears, stone fruits, or citrus.

29. The method of any one of claims 18 to 25, wherein the treatment is made to strawberries, cherries, almonds, mango, papaya, blueberries or grapes.

30. The method of any one of claims 18 to 25, wherein the treatment is made to soybeans, corn, cotton, wheat, barley, rye, rice, sugar beets or oilseed rape.

31. The method of any one of claims 18 to 25, wherein the treatment is made to turf or ornamentals.

32. The method of any one of claims 18 to 25, wherein the treatment is made to tea, tobacco or coffee.
